# EUROPÄISCHE PATENTSCHRIFT

(11) **EP 2 237 192 B1**
(45) Veröffentlichungstag und Bekanntmachung des Hinweises auf die Patenterteilung: **25.12.2019**
(21) Anmeldenummer: 10170635.6
(22) Anmeldetag: 30.06.2006
(51) Int. Cl.: G06K 19/07

(54) **Herstellung von Etiketten mit RFID-Transpondern**
Production of labels with RFID transponders
Fabrication d'étiquettes dotées de transpondeurs RFID

(30) Priorität: 31.08.2005 DE 102005041221
(43) Veröffentlichungstag der Anmeldung: 06.10.2010
(62) Teilanmeldung aus: 06762329.8
(73) Patentinhaber: Krones AG, 93073 Neutraubling (DE)
(72) Erfinder: Achhammer, Karl-Heinz, 93086 Wörth/Donau (DE)
(74) Vertreter: Grünecker Patent- und Rechtsanwälte PartG mbB

(56) Entgegenhaltungen:
- EP-A1- 1 504 998
- EP-A2- 0 615 285
- WO-A2-2005/073937
- DE-U1- 20 010 351
- US-A1- 2005 058 483

## Beschreibung

Die vorliegende Erfindung betrifft eine Vorrichtung zum Herstellen von Etiketten für Behälter und insbesondere für Flaschen und ein Etikettherstellungsverfahren. Insbesondere betrifft die Erfindung eine Vorrichtung und ein Verfahren zum Herstellen von Etiketten, die RFID-Transponder aufweisen. Automatische Identifikationsverfahren für Waren und Produkte werden weitverbreitet verwendet. Ein besonders kostengünstiges Verfahren basiert auf Strichcodes, die, zum Beispiel als Haftschildchen oder auf Etiketten aufgedruckt, zum automatischen Auslesen von Informationen, die Waren identifizieren und spezifizieren, dienen.

Strichcodes weisen jedoch dahingehend Probleme auf, dass sie eine nur sehr begrenzte Datenmenge darstellen können und dass sie nicht wiederbeschreibbar, also "umprogrammierbar", sind. Folglich werden in jüngerer Zeit Strichcodes und Strichcodeleser zunehmend durch RFID (Radio Frequency Identification) - Systeme ersetzt.

EP 0 615 285 A2 betrifft integrierte Schaltkreise wie Transponder, die an einem Substrat wie Kartonverpackungsmaterial angebracht sind, indem ein integrierter Schaltkreis an das Substrat angeklebt wird, eine Patch-Antenne auf das Substrat und den integrierten Schaltkreis aufgebracht wird und eine Versiegelungsschicht über dem integrierten Schaltkreis und mindestens über ein Teil der Antenne aufgebracht wird. DE 200 10 351 U1 betrifft ein Flaschenetikett zur Kennzeichnung des Flascheninhalts wobie das Flaschenetikett mindestens einen RFID-Transponder aufweist, der in das Flaschenetikett eingebettet ist und aus Chip mit Speicher und Koppelelement besteht. EP 1 504 998 A1 betrifft eine Etikettiermaschine mit einem rotierenden Karussell, das in einem Umfangsbereich mehrere Pfannen trägt, von denen jede zur Aufnahme und Lagerung einer Flasche ausgelegt ist. US 2005/058483 A1 betrifft ein RFID-Etikett mit eingebettetem Etikett, das durch eine RFID-Antenne in einem Druckersystem geführt wird, wobei die RFID-Antenne ermöglicht, dass eine Rolle solcher Etiketten in unmittelbarer Nähe der Antenne verläuft und dennoch jedes einzelne RFID-Etikett gelesen und / oder programmiert werden kann. WO 2005/073937 A2 betrifft ein Verfahren, umfassend: Bereitstellen einer HF-Antenne an einem Gegenstand; und elektrisches Koppeln eines separaten RFID-Elektronikmoduls mit der HF-Antenne an dem Gegenstand, nachdem die HF-Antenne an dem Gegenstand vorgesehen ist; wodurch eine RFID-Fähigkeit für den Gegenstand bereitgestellt wird.

RFID-Systeme schließen eine Leseeinrichtung und einen RFID-Transponder (ein RFID-Tag) ein. Die Leseeinrichtung umfasst typischerweise einen Hochfrequenzsender und -empfänger und ein Kopplungselement, d.h. eine Spule oder Antenne, zur Kommunikation mit dem Transponder. Zudem versorgt die Leseeinrichtung in vielen Anwendungen den Transponder mit Energie über die Aussendung eines hochfrequenten elektromagnetischen Felds, welches in der Antennenspule des Transponders eine Spannung induziert.

Der RFID-Transponder umfasst ebenfalls ein Kopplungselement und einen elektronischen Mikrochip, der die in Frage stehenden Daten in einem Speicher enthält. Der Transponder ist normalerweise induktiv oder über Rückstreuung mit der Leseeinrichtung gekoppelt. In dem ersten Fall liest die Leseeinrichtung Daten aus dem Transponder durch Lastmodulation des von der Leseeinrichtung ausgesendeten elektromagnetischen Felds, die durch einen entsprechenden Lastwiderstand bewirkt wird, der durch die Daten des Transponders gesteuert wird, aus.

Aufgrund der Umprogrammierbarkeit, hohen Datenspeicherkapazität und sicheren Auslesbarkeit von RFID-Transpondern können diese vorteilhaft in Verbindung mit Etiketten an Behältern, wie Flaschen, verwendet werden. So offenbart die deutsche Gebrauchsmusterschrift DE 200 10 351 ein Flaschenetikett, welches einen RFID-Transponder aufweist, der insbesondere in oder zwischen zwei Lagen des Etikettpapiers eingebettet sein kann.

Vor dem Aufdruck des Flaschenetiketts muss dieses jedoch mit dem RFID-Transponder versehen werden. Dem eigentlichen Etikettiervorgang ist also die Zusammenfügung von Etikettpapier und RFID-Transponder vorzuschalten, wodurch der gesamte Etikettiervorgang komplizierter und verlangsamt wird.

Es ist daher wünschenswert, eine Vorrichtung und ein Verfahren zur Verfügung zu stellen, die eine effizientere und verlässliche Herstellung von Etiketten für Behälter, beispielsweise für Flaschen, die RFID-Transponder aufweisen, und somit auch eine vereinfachte Etikettierung ermöglichen.

Die oben genannte Aufgabe wird durch eine Etikettiermaschine gemäß Anspruch 1 sowie durch ein Etikettherstellungsverfahren gemäß Anspruch 7 gelöst.

Gemäß Anspruch 1 wird eine Vorrichtung zum Herstellen eines Etiketts für einen Behälter, insbesondere für eine Flasche, zur Verfügung gestellt, die eine RFID-Fertigungseinrichtung umfasst, die konfiguriert ist, zumindest einen Teil eines Radio Frequency Identitfication (RFID) - Transponders bei dem Herstellen des Etiketts auszubilden.

Der Ausdruck "Etikett" ist hierin sehr allgemein zu verstehen. Einerseits wird hiermit ein bedrucktes Trägermedium, wie Papier oder eine Spezialfolie (PET), jeweils ggf. mit einer Klebelackbeschichtung, einer oberen elektrischen Isolationsschicht o.ä., bezeichnet, auf welchem erfindungsgemäß zumindest zum Teil ein RFID-Transponder ausgebildet ist.

Andererseits kann mit dem Begriff "Etikett" auch der Direktdruck auf einen Behälter, wie einer Flasche, bezeichnet sein. In diesem Fall wird ohne Trägermedium ein Bild, Schriftzug usw. und zumindest ein Teil des RFID-Transponders auf die Oberfläche des Behälters gedruckt.

Die RFID-Fertigungseinrichtung kann somit entweder so ausgebildet sein, dass zumindest ein Teil des RFID-Transponders auf einem Trägermedium oder unmittelbar auf einer Oberfläche des Behälters ausgebildet wird. Das Trägermedium kann sich auf dem Behälter befinden, oder es kann geeignet sein, auf der Oberfläche des Behälters angebracht zu werden.

Der RFID-Transponder kann ein solcher sein, der beispielsweise in einem Niedrigfrequenzbereich (unterhalb von 135 kHz), in einem mittleren Frequenzbereich (6,7 - 27,3 MHz) oder einem Ultrahochfrequenzbereich (433 MHz - 5,9 GHz) arbeitet.

Durch die Ausbildung zumindest eines Teils eines RFID-Transponders während der Etikettherstellung wird die Herstellung eines zumindest einen RFID-Transponder umfassenden Etiketts gegenüber dem Stand der Technik vereinfacht und effizienter gestaltet.

Die RFID-Fertigungseinrichtung kann eine Druckeinrichtung zum Drucken eines Teils eines RFID-Transponders umfassen, wobei die Druckeinrichtung vorteilhafter Weise so ausgebildet sein kann, dass sie elektrisch leitfähige Tinte druckt. Somit können Leiterbahnen, Spulen und Antennen durch elektrisch leitfähige Tinte gedruckt werden.

Der Begriff Tinte wird hier sehr allgemein verstanden und ist nicht auf Tinte auf Wasser-, Ölbasis usw., die elektrisch leitfähige Partikel, wie Edelstahlspäne, Kupferpartikel o.ä. enthält, beschränkt, sondern umfasst jegliche elektrisch leitfähige Flüssigkeit, die sich zum Drucken, beispielsweise mithilfe von herkömmlichen Druckköpfen, eignet. Insbesondere sind mit dem Begriff Tinte hierin auch Polymere, die in hauchfeinen Schichten mit hoher Präzision übereinander gedruckt werden können und sich ähnlich wie Tinte verarbeiten lassen, umfasst.

Nur relativ geringe und naheliegende Modifikationen bestehender Druckeinrichtungen von Vorrichtungen zur Etikettherstellung und von Etikettierungsmaschinen sind notwendig, um die Ausbildung von Teilen eines RFID-Transponders bei der Etikettherstellung durch Drucken mithilfe elektrisch leitfähiger Tinte zu ermöglichen.

Vorteilhafter Weise kann die RFID-Fertigungseinrichtung so ausgebildet sein, dass insbesondere eine Antenne als ein Teil des RFID-Transponders ausgebildet wird. Die Antenne stellt das Kopplungselement des RFID-Transponders dar, und sie ist besonders einfach bei der Etikettherstellung, insbesondere durch Drucken elektrisch leitfähiger Tinte, ausbildbar.

Gemäß einer Weiterbildung der erfindungsgemäßen Vorrichtung, kann die RFID-Fertigungseinrichtung so konfiguriert sein, dass sie zumindest einen Teil eines RFID-Mikrochips als ein Teil des RFID-Transponders ausbildet. Die Ausbildung eines Teils eines RFID-Transponders, z.B. mithilfe elektrisch leitfähiger Tinte, ist somit insbesondere nicht auf die Fertigung einer Antenne beschränkt. Analoge und digitale Schaltkreise sowie Leiterbahnen und Bauteile integrierter Schaltungen können ausgebildet und insbesondere gedruckt werden.

Weiterhin kann die erfindungsgemäße Vorrichtung eine Prägeeinrichtung und/oder eine Tinten- und Farbsteuereinrichtung und/oder eine Trocknungseinrichtung und/oder eine Äushärtungseinrichtung und/oder eine Isoliereinrichtung und/oder eine Einrichtung zum Anordnen eines RFID-Mikrochips und/oder eine Druckeinrichtung zum Drucken farbiger Tinte umfassen.

Die Prägeeinrichtung kann konfiguriert sein, ein Trägermedium oder eine Behälteroberfläche vor einem Bedrucken zu prägen. Tinte, die in die Prägungen gedruckt wird, kann besser fixiert werden. Eine Antenne kann bevorzugt in den Prägungen durch Drucken mit elektrisch leitfähiger Tinte ausgebildet und ggf. isoliert werden. Eine Kontrolleinrichtung kann die Ausbildung der Prägekanten, z.B. optisch, kontrollieren.

Die Trocknungseinrichtung kann eine Nahinfrarot-Trocknungseinrichtung sein und dem Trocknen der gedruckten Tinte dienen. Die Aushärtungseinrichtung kann eine Ultraviolett-Aushärtungseinrichtung sein und der Aushärtung von Tinte, aber auch der Aushärtung von einer Verbindung eines Mikrochips mit dem übrigen Etikett dienen, welche durch die Einrichtung zum Anordnen eines RFID-Mikrochips hergestellt werden kann. Diese letztere Einrichtung kann dazu dienen, einen Mikrochip dem Etikett zuzuführen, ihn in elektrischen Kontakt mit der Antenne des RFID-Transponders zu bringen und ihn, beispielsweise durch Kleben, mit dem Trägermedium oder der Oberfläche des Behälters zu verbinden.

Die Isoliereinrichtung dient dem elektrischen Isolieren von zumindest Teilen des RFID-Transponders. Insbesondere kann sie verwendet werden, um eine Isolierschicht über der Antenne auftragen. Die erwähnte Druckeinrichtung zum Drucken farbiger Tinte kann zu einem zusätzlichen Drucken eines Bereichs des Etiketts verwendet werden, in dem keine elektrisch leitfähige Tinte notwendig ist.

Die vorliegende Erfindung stellt auch eine Etikettiermaschine bereit, die eine Vorrichtung zum Herstellen eines Etiketts wie zuvor beschrieben und ein Karussell zum Befördern von Behältern, die an einem Einlass dem Karussell zugeführt werden und dieses an einem Auslass verlassen, umfasst.

Die oben genannte Aufgabe wird auch durch das erfindungsgemäße Verfahren zum Herstellen eines Etiketts für einen Behälter, insbesondere für eine Flasche, gelöst, das dadurch gekennzeichnet ist, dass zumindest ein Teil eines RFID-Transponders bei dem Herstellen des Etiketts ausgebildet wird.

Eine Etikettierung eines Behälters kann nach Fertigstellung des Etiketts erfolgen, oder das Etikett kann direkt auf der Oberfläche des Behälters oder auf einem auf der Oberfläche des Behälters angebrachten Trägermedium ausgebildet werden.

Gemäß dem erfindungsgemäßen Verfahren kann zumindest ein Teil des RFID-Transponders durch Drucken ausgebildet werden, und das Drucken kann ein Drucken von elektrisch leitfähiger Tinte umfassen. Eine Antenne kann als ein Teil des RFID-Transponders ausgebildet werden. Vor dem Drucken kann eine elektrostatische Vorbehandlung der zu bedruckenden Oberfläche erfolgen, indem z.B. eine Luftschicht oberhalb der Oberfläche, beispielsweise mithilfe einer Koronaentladungseinrichtung, ionisiert wird.

Der zumindest eine Teil des RFID-Transponders kann auf einem Trägermedium oder alternativ unmittelbar auf einer Oberfläche des Behälters ausgebildet werden. Das Trägermedium kann auf einer Oberfläche des Behälters angebracht sein, oder es kann geeignet sein, darauf angebracht zu werden.

Weiterhin kann zumindest ein Teil eines RFID-Mikrochips als ein Teil des RFID-Transponders ausgebildet sein. So können beispielsweise Leiterbahnen des Chips und/oder Bauteile desselben gedruckt werden.

Gemäß einer Weiterbildung kann das Verfahren zum Herstellen eines Etiketts durch Drucken Prägen eines Trägermediums oder einer Oberfläche des Behälters, um einen geprägten Bereich auszubilden, umfassen, wobei das Drucken zumindest eines Teils des RFID-Transponders in dem geprägten Bereich erfolgt.

Zusätzlich kann ein Trocknen, insbesondere Nahinfrarot-Trocknen, und/oder Aushärten, insbesondere Ultraviolett-Aushärten, der elektrisch leitfähigen Tinte, wenn eine solche verwendet wird, ausgeführt werden.

Das Verfahren kann zudem das Ausbilden einer Isolierschicht über zumindest einen Teil des RFID-Transponders bzw. über zumindest einen Teil der Antenne umfassen.

Außerdem kann ein RFID-Mikrochip so angeordnet werden, dass er in elektrischem Kontakt mit der Antenne steht. Ist diese zuvor vollständig isoliert worden, muss hierzu die Isolierung lokal aufgehoben werden. Ein bereits fertiger RFID-Mikrochip kann dem Etikett zugeführt werden, oder es wird ein zumindest teilweise bei der Herstellung des Etiketts erzeugter RFID-Mikrochip in elektrischem Kontakt mit der Antenne angeordnet. UV-Aushärten kann der klebenden Befestigung eines RFID-Mikrochip in elektrischem Kontakt mit der Antenne folgen.

Die vorliegende Erfindung stellt darüber hinaus ein Etikett für einen Behälter, insbesondere für eine Flasche, zur Verfügung, das zumindest einen RFID-Transponder umfasst, und welches dadurch gekennzeichnet ist, dass es durch eines der oben beschriebenen Verfahren hergestellt wird. Die Antenne des zumindest einen RFID-Transponders kann hierbei Teil des bedruckten Bereichs des Etiketts sein, welches ein Trägermedium umfassen kann oder direkt auf dem Behälter gedruckt wird.

Im folgenden werden Ausführungsformen einer erfindungsgemäßen Vorrichtung und eines erfindungsgemäßen Verfahrens unter Bezugnahme auf die Zeichnung beschrieben. Die beschriebenen Ausführungsformen sind in jeder Hinsicht lediglich als illustrativ und nicht als einschränkend anzusehen und verschiedene Kombinationen der angeführten Merkmale sind in der Erfindung eingeschlossen.

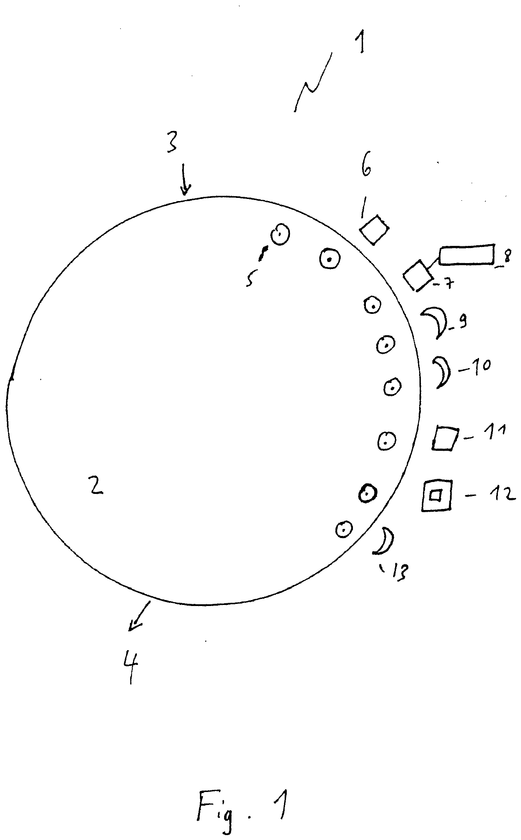

Figur 1 zeigt Bestandteile einer Ausführungsform einer Etikettiermaschine, die eine Vorrichtung zum Herstellen von Etiketten gemäß der vorliegenden Erfindung umfasst, welche eine Druckeinrichtung, die ausgebildet ist, eine Antenne für einen RFID-Transponder auf ein Trägermedium eines Etiketts zu drucken, und eine Einrichtung umfasst, die einen RFID-Mikrochip dem Etikett zuführt und diesen in elektrischem Kontakt mit der Antenne mit dem Etikett verbindet.

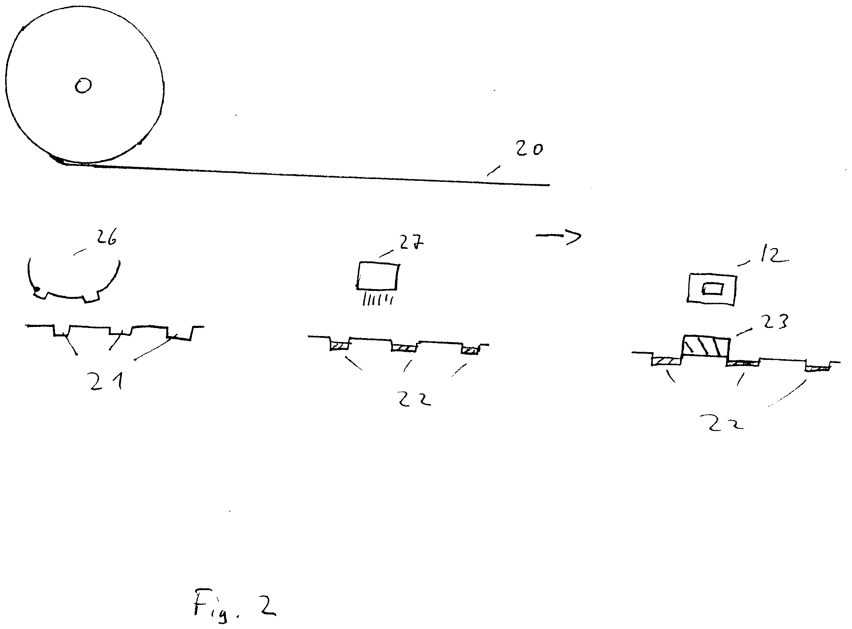

Fig. 2 illustriert beispielhafte Verarbeitungsschritte bei der Herstellung eines Etiketts mithilfe eines Trägermediums, bei der zumindest teilweise auch ein RFID-Transponder hergestellt wird.

Die in Fig. 1 teilweise gezeigte Etikettiermaschine 1 umfasst ein sich in Uhrzeigerrichtung drehendes Karussell 2 mit einem Einlass 3 und einem Auslass 4 für Flaschen 5, die zu etikettieren sind. Einer Etikettierungsstrecke werden die Flaschen, die mit einem Trägermedium, wie Papier oder eine Folie, versehen sein können, mithilfe dessen Etiketten hergestellt werden, die auf den Flaschen ausgebildet werden, zugeführt. Alternativ können erfindungsgemäß ein Trägermedium umfassende Etiketten zumindest teilweise vor der Befestigung desselben auf den Flaschen hergestellt werden.

Im weiteren erfolgt die Beschreibung unter der Annahme, dass ein Trägermedium auf den Flaschen zur Ausbildung von Etiketten ausgebracht ist. Es versteht sich für den Fachmann, dass die direkte Ausbildung auf der Oberfläche der Flaschen ohne ein Trägermedium analog erfolgen kann.

Die Etikettierstrecke umfasst eine Prägeeinrichtung 6 optional gefolgt von einer Prägekontrolleinrichtung (nicht gezeigt), die die Prägekante der von der Prägeeinrichtung 6 in dem Trägermedium eingebrachten Prägung (siehe auch Fig. 2) kontrollieren kann, sowie eine Druckeinrichtung 7, welche, gesteuert von einer Tinten- und Farbsteuereinrichtung 8, in die Prägung wie auch außerhalb der Prägung Tinte auf dem Trägermedium aufbringt. Es können verschiedene Arten von Tinte aufgebracht werden. Insbesondere kann eine elektrisch leitfähige Tinte in der Prägung aufgetragen werden. Die Druckeinrichtung 7 umfasst einen oder mehrere feststehende Tintenstrahl-Druckköpfe mit Piezodüsen, die einen vier- bis achtfarbigen Druck mit 600 - 800 dpi erlauben.

Die Etikettierstrecke umfasst weiterhin eine Nahinfrarot-Trocknungseinrichtung 9, eine Ultraviolett-Härtungseinrichtung 10 und eine Isoliereinrichtung 11. Letztere isoliert insbesondere in der Prägung aufgebrachte elektrisch leitfähige Tinte. Zusätzlich kann das verwendete Trägermedium auf der Oberseite, d.h. der Seite, die von einem Stempel der Prägeeinrichtung 6 zuerst beim Prägen getroffen wird, eine Isolationsschicht aufweisen.

In der hier beschriebenen Ausführungsform der vorliegenden Erfindung kann eine Antenne eines RFID-Transponders mithilfe elektrisch leitfähiger Tinte in der Prägung, die die Prägeeinrichtung 6 in dem Trägermedium verursacht, mithilfe der Druckeinrichtung 7 ausgebildet werden.

Eine Einrichtung 12 zum Zuführen eines RFID-Mikrochips und zum mechanischen und elektrischen Verbinden desselben mit dem Etikett bzw. der Antenne dient der Fertigstellung eines RFID-Transponders in dem Etikett in Rahmen der Etikett-Herstellung und des Aufbringens des Etiketts an einer Flasche 5. Die Etikettierstrecke umfasst somit in dieser Ausführungsform eine RFID-Fertigungseinrichtung zum Erstellen eines RFID-Transponders, die die Druckeinrichtung 7 und die Einrichtung 12 umfasst.

Der Mikrochip weist einen selbstresonanten Schwingkreis, einen zusätzlichen Lastwiderstand, einen zusätzlichen Kondensator, der durch eine Leseeinrichtung induktiv aufgeladen werden kann und so der Stromversorgung des RFID-Transponders dient, und einen wiederbeschreibbaren Speicher auf. In diesem Beispiel entsteht so ein Hochfrequenz-Transponder, der ein von einem Reader ausgesendetes elektromagnetisches Feld durch Lastmodulation mithilfe eines steuerbaren Widerstands moduliert und Daten, die in dem Speicher gespeichert sind, an die Leseeinrichtung übermittelt. Der Mikrochip kann mithilfe einer klebbaren Rückseite mechanisch mit dem Etikett verbunden werden. Eine weitere UV-Härtungseinrichtung 13 dient der Fixierung der Klebeverbindung.

In einer alternativen Ausführungsform erfolgt der Druck des Etiketts direkt, d.h. ohne Verwendung eines Trägermediums, auf der Flasche, welche beispielsweise aus einem PET-Material hergestellt sein kann. Erfolgt der Druck mit mehreren hintereinandergeschalteten Druckköpfen, so kann zwischen den einzelnen Druckköpfen jeweils eine Trocken- und/oder Aushärtungseinrichtung zum Fixieren der Tinte angeordnet sein.

Weiterhin kann gemäß einer alternativen Ausführungsform nicht nur die Antenne eines RFID-Transponders als Bestandteil des Etiketts - sei es ein Etikett, das ein Trägermedium umfasst, oder ein Etikett, dass direkt auf einen Behälter, wie einer Flasche, gedruckt wird - gedruckt werden, sondern auch zumindest ein Teil des RFID-Mikrochips mithilfe der Druckeinrichtung 7 erstellt werden. In diesem Fall werden unterschiedliche Materialien mithilfe der Druckeinrichtung, u.a. ein geeignetes Polymer, gedruckt, um Leiterbahnen, aber auch elektronische Bauteile zu drucken. Hierbei sollte die Herstellung des Etiketts zumindest teilweise bevorzugt unter Reinraumbedingungen erfolgen.

Fig. 2 illustriert einige Schritte eines Beispiels für das erfindungsgemäße Herstellungsverfahren eines Etiketts mit einem RFID-Transponder. Ein Trägermedium 20, das von einer Rolle zugeführt wird, wird mithilfe einer Prägeeinrichtung 26 geprägt, sodass Prägungen (Vertiefungen) 21 in dem Trägermedium entstehen. Das Trägermedium kann Papier, ein SK-Label, eine beschichtete PET-Folie usw. sein. Das Trägermedium kann vor dem Anbringen auf der Oberfläche eines Behälters bearbeitet werden, oder wenn es bereits auf dem Behälter angebracht, z.B. geklebt worden, ist.

Das geprägte Trägermedium 20 wird mithilfe zumindest eines Druckkopfs 27 bedruckt. Der Druckkopf druckt elektrisch leitfähige Tinte 22 in die Prägungen 21, wodurch eine Antenne eines RFID-Transponders in dem Trägermedium 20 ausgebildet wird. Anschließend kann Trocknen und/oder Aushärten der Tinte erfolgen. Die Tinte kann Eisenoxid, Aluminiumpartikel, Silberpartikel, Edelstahlfasern usw. aufweisen.

Vor dem Bedrucken, das auch Bedrucken mit nicht leitfähiger Tinte, wie IR/UV-Tinte, Tinte auf Wasser- oder Ölbasis o.ä., in und außerhalb der Prägungen 21 umfassen kann, kann das Trägermedium durch Ionisation der an der Oberfläche befindlichen Luftschicht elektrostatisch vorbehandelt werden, sodass u.a. die Tintenpartikel besser an dem Trägermedium haften.

Um den RFID-Transponder fertig zustellen, wird ein RFID-Mikrochip 23 von einer entsprechenden Einrichtung 12 zugeführt und positioniert, mit dem Trägermedium verklebt und elektrisch mit der Antenne verbunden. Diese kann zuvor elektrisch isoliert worden sein, in welchem Fall die Isolation lokal zur elektrischen Verbindung mit dem Mikrochip wieder aufgehoben wird. Die Klebeverbindung kann nachfolgen UV-ausgehärtet werden.

Die vorgenannten Schritte können alternativ auf dem bereits an einer Flasche oder einem anderen Behälter befestigten Trägermedium oder vor der Befestigung des fertiggestellten Etiketts an einem Behälter erfolgen. Jedes Etikett für sich, das durch Perforieren oder Stanzen aus dem Band des Trägermediums vereinzelt wird, kann, wenn gewünscht, mehr als einen RFID-Transponder enthalten.

## Patentansprüche

1. Etikettiermaschine (1) mit
einem Karussell (2) zum Befördern von Behältern (5), insbesondere für eine Flasche, entlang einer Etikettierstrecke,
einer Vorrichtung zum Herstellen eines Etiketts für den Behälter, wobei das Etikett unmittelbar auf einer Oberfläche des Behälters in der Etikettierstrecke ausgebildet wird, und mit
einer RFID-Fertigungseinrichtung, die so ausgebildet ist, dass zumindest ein Teil eines Radio Frequency Identification (RFID)-Transponders bei dem Herstellen des Etiketts in der Etikettierstrecke ausgebildet wird,
wobei die RFID-Fertigungseinrichtung eine Druckeinrichtung (7) zum Drucken eines Teils des RFID-Transponders umfasst, und
wobei die Druckeinrichtung ausgebildet ist, den zumindest einen Teil des RFID-Transponders und das Etikett unmittelbar auf der Oberfläche des Behälters in der Etikettierstrecke zu drucken.

2. Etikettiermaschine nach Patentanspruch 1, wobei der zumindest eine Teil des RFID-Transponders eine Antenne und/oder ein analoger Schaltkreis und/oder ein digitaler Schaltkreis und/oder eine Leiterbahn einer integrierten Schaltung und/oder ein Bauteil einer integrierten Schaltung ist.

3. Etikettiermaschine nach Patentanspruch 1 oder 2, wobei das Etikett ein Bild und/oder ein Schriftzug ist.

4. Etikettiermaschine nach einem der vorangehenden Patentansprüche 1 - 3, wobei die Druckeinrichtung geeignet ist, elektrisch leitfähige Tinte und elektrisch nicht leitfähige Tinte zu drucken.

5. Etikettiermaschine nach einem der vorangehenden Patentansprüche 1 - 4, wobei die Druckeinrichtung geeignet ist, farbige Tinte zu drucken.

6. Etikettiermaschine nach einem der vorangehenden Patentansprüche 1 - 5, wobei die Etikettiermaschine eine Prägeeinrichtung (6) und/oder eine Tinten- und Farbsteuereinrichtung (8) und/oder eine Trocknungseinrichtung (9) und/oder Aushärtungseinrichtung (10) und/oder eine Isoliereinrichtung (11) und/oder eine Einrichtung zum Anordnen eines RFID-Mikrochips (12) umfasst.

7. Verfahren zum Herstellen eines Etiketts für einen Behälter (5), insbesondere für eine Flasche, in einer Etikettierstrecke, wobei der Behälter von einem Karussell (2) entlang einer Etikettierstrecke befördert wird, und wobei zumindest ein Teil eines Radio Frequency Identification (RFID)-Transponders und das Etikett unmittelbar auf einer Oberfläche des Behälters in der Etikettierstrecke gedruckt werden.

8. Verfahren nach Patentanspruch 7, wobei das Drucken des zumindest einen Teils des RFID-Transponders ein Drucken von einer Antenne und/oder einem analogen Schaltkreis und/oder einem digitalen Schaltkreis und/oder einer Leiterbahn einer integrierten Schaltung und/oder einem Bauteil einer integrierten Schaltung umfasst.

9. Verfahren nach Patentanspruch 7 oder 8, wobei das Drucken des Etiketts ein Drucken von einem Bild und/oder einem Schriftzug umfasst.

10. Verfahren nach einem der vorangehenden Patentansprüche 7 - 9, wobei das Drucken ein Drucken mit elektrisch leitfähiger Tinte und elektrisch nicht leitfähiger Tinte umfasst.

11. Verfahren nach einem der vorangehenden Patentansprüche 7 - 10, wobei das Drucken ein Drucken mit farbiger Tinte umfasst.

12. Verfahren nach einem der vorangehenden Patentansprüche 7 - 11, wobei die Oberfläche des Behälters geprägt wird, um einen geprägten Bereich auszubilden, und wobei der zumindest eine Teil des RFID-Transponders in den geprägten Bereich gedruckt wird.

13. Verfahren nach einem der vorangehenden Patentansprüche 7 - 12 mit den weiteren Schritten: Trocknen, insbesondere Nahinfrarot-Trocknen, und/oder Aushärten, insbesondere Ultraviolett-Aushärten, und/oder Ausbilden einer Isolierschicht über zumindest einen Teil des RFID-Transponders.

14. Verfahren nach einem der vorangehenden Patentansprüche 7 - 13 mit dem weiteren Schritt: Anordnen eines RFID-Mikrochips (23), so dass der RFID-Mikrochip in elektrischem Kontakt mit einer Antenne steht.

15. Behälter mit einem Etikett, das durch ein Verfahren nach einem der Patentansprüche 7 - 14 hergestellt wurde.

## Claims

1. Labelling machine (1) comprising
a carousel (2) for transporting containers (5), in particular a bottle, along a labelling section,
a device for producing a label for the container, wherein the label is formed directly on a surface of the container in the labelling section, and comprising
an RFID production device, which is configured such that at least one part of a Radio Frequency Identification (RFID) transponder is formed during the production of the label in the labelling section,
wherein the RFID production device comprises a printing device (7) for printing a part of the RFID transponder, and
wherein the printing device is configured to print the at least one part of the RFID transponder and the label directly on the surface of the container in the labelling section.

2. Labelling machine according to Claim 1, wherein the at least one part of the RFID transponder is an antenna and/or an analogue circuit and/or a digital circuit and/or a conductor path of an integrated circuit and/or a component of an integrated circuit.

3. Labelling machine according to Claim 1 or 2, wherein the label is an image and/or writing.

4. Labelling machine according to any one of the preceding Claims 1 - 3, wherein the printing device is suitable for printing electrically conductive ink and electrically non-conductive ink.

5. Labelling machine according to any one of the preceding Claims 1 - 4, wherein the printing device is suitable for printing coloured ink.

6. Labelling machine according to any one of the preceding Claims 1 - 5, wherein the labelling machine comprises an embossing device (6) and/or an ink and colour control device (8) and/or a drying device (9) and/or a hardening device (10) and/or an insulation device (11) and/or a device for arranging an RFID microchip (12).

7. Method for producing a label for a container (5), in particular for a bottle, in a labelling section, wherein the container is transported by a carousel (2) along a labelling section, and wherein at least one part of a Radio Frequency Identification (RFID) transponder and the label are directly printed on a surface of the container in the labelling section.

8. Method according to Claim 7, wherein the printing of the at least one part of the RFID transponder includes a printing of an antenna and/or an analogue circuit and/or a digital circuit and/or a conductor path of an integrated circuit and/or a component of an integrated circuit.

9. Method according to Claim 7 or 8, wherein the printing of the label includes a printing of an image and/or writing.

10. Method according to any one of the preceding Claims 7 - 9, wherein the printing includes a printing with electrically conductive ink and electrically non-conductive ink.

11. Method according to any one of the preceding Claims 7 - 10, wherein the printing includes a printing with coloured ink.

12. Method according to any one of the preceding Claims 7 - 11, wherein the surface of the container is embossed to form an embossed area, and wherein the at least one part of the RFID transponder is printed in the embossed area.

13. Method according to any one of the preceding Claims 7 - 12 comprising the further steps: Drying, especially near-infrared drying, and/or hardening, in particular ultraviolet hardening, and/or forming an insulating layer over at least one part of the RFID transponder.

14. Method according to any one of the preceding Claims 7 - 13 comprising the further step: Arrangement of an RFID microchip (23), so that the RFID microchip is in electrical contact with an antenna.

15. Container with a label that was produced by a method according to any one of Claims 7 - 14.

## Revendications

1. Machine d'étiquetage (1) comprenant une table rotative ou carrousel (2) pour assurer le transport de contenants (5), notamment d'une bouteille, le long d'un parcours d'étiquetage,
un dispositif pour réaliser une étiquette pour le contenant, l'étiquette étant formée directement sur une surface du contenant dans le parcours d'étiquetage, et comprenant
un dispositif de réalisation de système RFID, qui est conçu de manière à former au moins une partie d'un transpondeur RFID (radio Frequency Identification) lors de la réalisation de l'étiquette dans le parcours d'étiquetage,
machine d'étiquetage
dans laquelle le dispositif de réalisation de système RFID comprend un dispositif d'impression (7) pour imprimer une partie du transpondeur RFID, et
dans laquelle le dispositif d'impression est conçu pour imprimer ladite au moins une partie du transpondeur RFID et l'tiquette, directement sur la surface du contenant dans le parcours d'étiquetage.

2. Machine d'étiquetage selon la revendication 1, dans laquelle ladite au moins une partie du transpondeur RFID est une antenne et/ou un circuit analogique et/ou un circuit numérique et/ou une piste conductrice d'un circuit intégré et/ou un composant d'un circuit intégré.

3. Machine d'étiquetage selon la revendication 1 ou la revendication 2, dans laquelle l'étiquette est une image et/ou une inscription de texte.

4. Machine d'étiquetage selon l'une des revendications précédentes 1 - 3, dans laquelle le dispositif d'impression est en mesure d'imprimer à l'aide d'encre électriquement conductrice et d'encre non conductrice sur le plan électrique.

5. Machine d'étiquetage selon l'une des revendications précédentes 1 - 4, dans laquelle le dispositif d'impression est en mesure d'imprimer à l'aide d'encre de couleur.

6. Machine d'étiquetage selon l'une des revendications précédentes 1 - 5, la machine d'étiquetage comprenant un dispositif de gaufrage (6) et/ou un dispositif de commande d'encre et de couleurs (8) et/ou un dispositif de séchage (9) et/ou un dispositif de durcissement (10) et/ou un dispositif d'isolation (11) et/ou un dispositif pour l'agencement d'une micropuce RFID (12).

7. Procédé de réalisation d'une étiquette pour un contenant (5), notamment pour une bouteille, dans un parcours d'étiquetage, procédé d'après lequel les contenants sont transportés par une table rotative ou carrousel (2) le long d'un parcours d'étiquetage, et d'après lequel au moins une partie d'un transpondeur RFID (radio Frequency Identification), et l'étiquette sont imprimées directement sur une surface du contenant, dans le parcours d'étiquetage.

8. Procédé selon la revendication 7, d'après lequel l'impression de ladite au moins une partie du transpondeur RFID comprend l'impression d'une antenne et/ou d'un circuit analogique et/ou d'un circuit numérique et/ou d'une piste conductrice d'un circuit intégré et/ou d'un composant d'un circuit intégré.

9. Procédé selon la revendication 7 ou la revendication 8, d'après lequel l'impression de l'étiquette comprend l'impression d'une image et/ou d'une inscription de texte.

10. Procédé selon l'une des revendications précédentes 7 - 9, d'après lequel l'impression comprend une impression à l'aide d'encre électriquement conductrice et d'encre non conductrice sur le plan électrique.

11. Procédé selon l'une des revendications précédentes 7 - 10, d'après lequel l'impression comprend une impression à l'aide d'encre de couleur.

12. Procédé selon l'une des revendications précédentes 7 - 11, d'après lequel on effectue un gaufrage de la surface du contenant en vue de former une zone gaufrée, et d'après lequel ladite au moins une partie du transpondeur RFID est imprimée dans la zone gaufrée.

13. Procédé selon l'une des revendications précédentes 7 - 12, comprenant les étapes supplémentaires suivantes : un séchage, notamment un séchage dans le proche infrarouge, et/ou un durcissement, notamment un durcissement aux ultraviolets, et/ou la formation d'une couche isolante par-dessus au moins une partie du transpondeur RFID.

14. Procédé selon l'une des revendications précédentes 7 - 13, comprenant l'étape supplémentaire suivante : l'agencement d'une micropuce RFID (23) de manière telle, que la micropuce RFID soit en contact électrique avec une antenne.

15. Contenant comportant une étiquette qui a été réalisée par un procédé selon l'une des revendications 7 - 14.
